# EUROPEAN PATENT SPECIFICATION

(11) **EP 4 411 943 B1**
(45) Date of publication and mention of the grant of the patent: **04.02.2026**
(21) Application number: 22907939.7
(22) Date of filing: 14.12.2022
(51) Int. Cl.: H01M 50/105, H01M 50/131

(54) **POUCH-TYPE BATTERY CASE AND SECONDARY BATTERY INCLUDING THE SAME**
BEUTELARTIGES BATTERIEGEHÄUSE UND SEKUNDÄRBATTERIE DAMIT
BOÎTIER DE BATTERIE DE TYPE POCHE ET BATTERIE SECONDAIRE LE COMPRENANT

(30) Priority: 16.12.2021 KR 20210181099; 01.12.2022 KR 20220166024
(43) Date of publication of application: 07.08.2024
(73) Proprietor: LG Energy Solution, Ltd., Seoul 07335 (KR)
(72) Inventor: KIM, Hyun Beom, Daejeon 34122 (KR); HA, Jeong Min, Daejeon 34122 (KR); KIM, Gi Man, Daejeon 34122 (KR); KIM, Dae Hong, Daejeon 34122 (KR); KIM, Sin Woong, Daejeon 34122 (KR)
(74) Representative: Plasseraud IP
(86) International application number: PCT/KR2022/020375
(87) International publication number: WO 2023/113472

(56) References cited:
- JP-A- 2005 294 212
- JP-A- 2007 257 847
- JP-A- 2019 212 541
- KR-A- 20170 091 938
- KR-A- 20170 091 938
- KR-A- 20190 020 171
- KR-A- 20190 020 171

## Description

### TECHNICAL FIELD

### CROSS-REFERENCE TO RELATED APPLICATION

The present application claims the benefit of the priority of Korean Patent Application Nos. 10-2021-0181099, filed on December 16, 2021, and 10-2022-0166024, filed on December 01, 2022.

### TECHNICAL FIELD

The present invention relates to a pouch-type battery case manufactured by molding a pouch film and a secondary battery including the same.

### BACKGROUND ART

In general, secondary batteries include nickel-cadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch-type secondary battery and a can type secondary battery according to a material of a case accommodating the electrode assembly. In the pouch-type secondary battery, an electrode assembly is accommodated in a pouch made of a flexible polymer material. Also, in the can-type secondary battery, an electrode assembly is accommodated in a case made of a metal or plastic material.

A pouch, which is a case of the pouch-type secondary battery, is manufactured by forming a cup part by performing press processing on a pouch film having flexibility. In addition, when the cup part is formed, an electrode assembly is accommodated in an accommodation space of the cup part, and then, a side of the cup part is sealed to manufacture a secondary battery.

In the press processing, drawing-molding is performed by inserting a pouch film into a molding device such as a press equipment and applying a pressure to the pouch film by using a punch to draw the pouch film. The pouch film is provided as a plurality of layers, and a barrier layer disposed in the pouch film is made of a metal. However, according to the related art, the metal of the barrier layer has a large crystal grain size among aluminum alloys, and the barrier layer has a thin thickness. As a result, moldability may be deteriorated. Therefore, there is a limitation to mold a cup part of which each edge has a sufficient small curvature radius while molding the cup part having a deep depth when the cup part is molded in a pouch film, and thus, an energy density relative to the volume of the secondary battery also decreases due to an empty space in the cup part.

Furthermore, there was a limitation in manufacturing a sharp shape as a whole, and thus, the outer appearance of the secondary battery is not elegant, and thus, there has been a problem in that the marketability is also lowered.

Document KR 2019/0020171 discloses an outer casing for a power storage device of known type.

Document KR 2017/0091938 discloses a pouch-type battery cell case made of a laminate sheet of the related art.

### DISCLOSURE OF THE INVENTION

### TECHNICAL PROBLEM

An object to be achieved by the present invention is to provide a pouch-type battery case, which is capable of increasing an energy density, having an elegant outer appearance, and improving marketability, and a secondary battery including the same.

Another object to be achieved by the present invention is to provide a pouch-type battery case, in which cracks and pin-holes are not formed, and a secondary battery including the same.

The objects of the present invention are not limited to the aforementioned object, but other objects not described herein will be clearly understood by those skilled in the art from descriptions below.

### TECHNICAL SOLUTION

A pouch-type battery as defined in claim 1.

A secondary battery according to claim 13.

### ADVANTAGEOUS EFFECTS

According to the preferred embodiment of the present invention, since each of the edges of the cup part has smaller curvature radius, and the empty space that is not occupied by the electrode assembly in the cup part is capable of being reduced, the energy density of the secondary battery may increase.

In addition, since each of the pouch-type battery case has the sharp shape on the whole, the outer appearance of the secondary battery may be elegant, and the marketability may be improved.

In addition, the possibility of occurrence of the cracks or pin-holes in the cup part may be eliminated.

The effects of the present invention are not limited to the aforementioned effects, but other effects not described herein will be clearly understood by those skilled in the art from descriptions below.

### BRIEF DESCRIPTION OF THE DRAWINGS

FIG. 1 is an assembly view of a secondary battery according to an embodiment of the present invention.
FIG. 2 is a plan view of the secondary battery according to an embodiment of the present invention.
FIG. 3 is a schematic view illustrating a state in which a pouch-type battery case is folded according to an embodiment of the present invention.
FIG. 4 is a cross-sectional view taken along line A-A' of FIG. 2.
FIG. 5 is a cross-sectional view taken along the line B-B' of FIG. 2.
FIG. 6 is a schematic view illustrating a molding device for molding a pouch-type battery case according to an embodiment of the present invention.

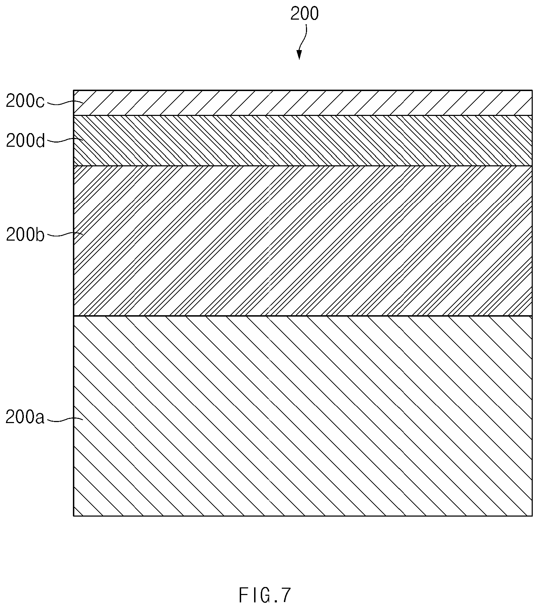

FIG. 7 is a cross-sectional view of a pouch film of FIG. 6.
FIG. 8 is a graph illustrating iron and silicon contents of an aluminum alloy having an alloy number AA8079 and an aluminum alloy having an alloy number AA8021.
FIG. 9 is a graph illustrating tensile strength, an elongation rate, and a grain size according to the iron and silicon contents of the aluminum alloy having the alloy number AA8079 and the aluminum alloy having the alloy number AA8021.
FIG. 10 is an enlarged SEM image illustrating grains of the aluminum alloy having the alloy number AA8079 and the aluminum alloy having the alloy number AA8021.
FIG. 11 is a schematic view illustrating a state in which a pouch-type battery case is folded according to another embodiment of the present invention.
FIG. 12 is a schematic view illustrating a state in which a pouch-type battery case is folded according to another embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

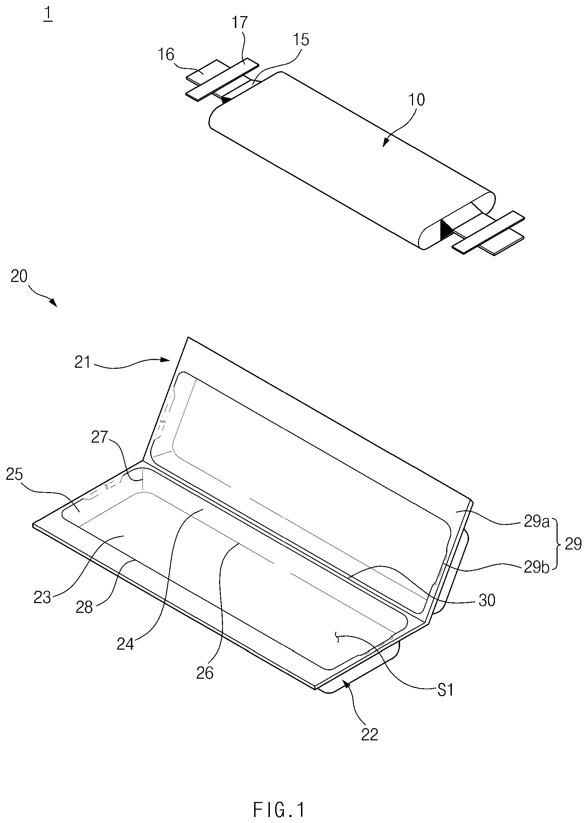

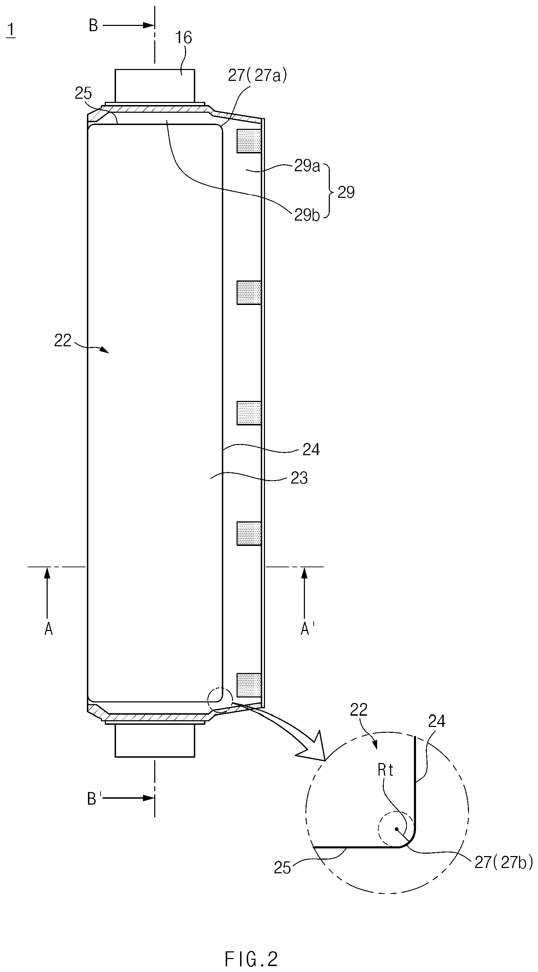

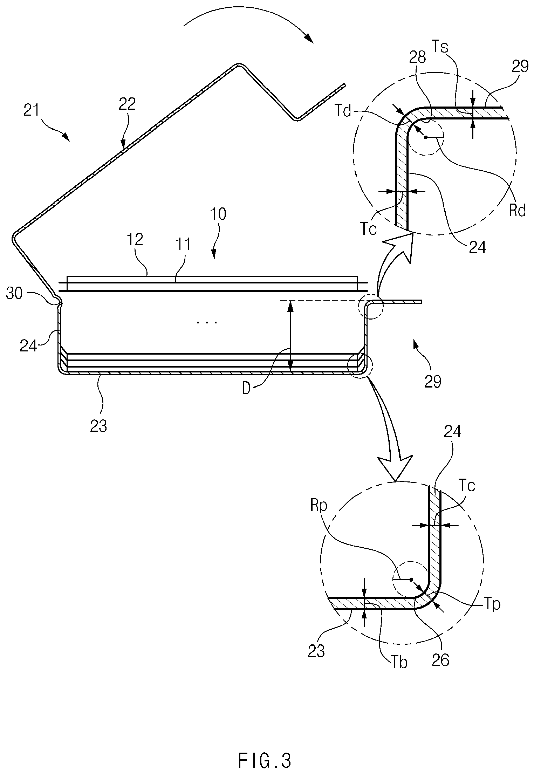

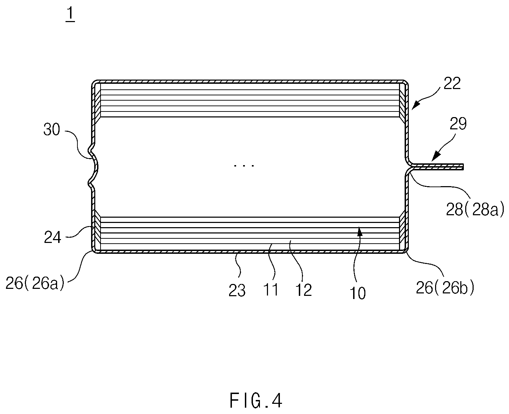

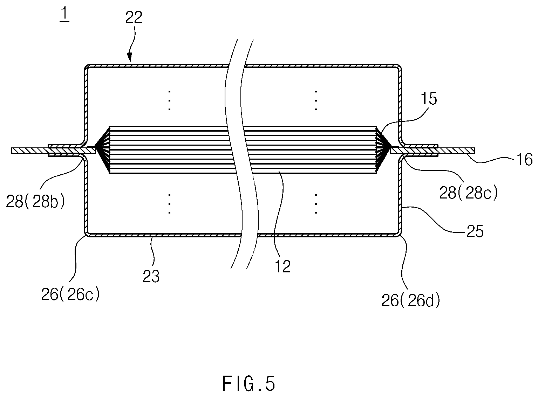

FIG. 1 is an assembly view of a secondary battery according to an embodiment of the present invention, FIG. 2 is a plan view of the secondary battery according to an embodiment of the present invention, FIG. 3 is a schematic view illustrating a state in which a pouch-type battery case is folded according to an embodiment of the present invention, FIG. 4 is a cross-sectional view taken along line A-A' of FIG. 2, and FIG. 5 is a cross-sectional view taken along the line B-B' of FIG. 2.

A secondary battery 1 according to the present invention may include an electrode assembly 10 and a pouch-type battery case 20 (hereinafter, referred to as a 'battery case') accommodating the electrode assembly 10.

The electrode assembly 10 may have a surface area of 15,000 mm² to 100,000 mm², which is obtained by multiplying a full-length by a full-width. In particular, the full-width of the electrode assembly 10 may be 60 mm or more. Also, the electrode assembly 10 may have a thickness of 6 mm to 20 mm in a stacked direction. Therefore, the electrode assembly 10 according to an embodiment of the present invention may provide a large battery capacity when compared to a general small-sized battery.

The electrode assembly 10 may be formed with a separator 11 interposed between the plurality of electrodes 12. For example, there is a simple stack type in which the plurality of electrodes 12 and separators 11 are alternately stacked, or a lamination & stack type in which unit cells, in which the electrodes 12 and the separators 11 are laminated, are stacked. However, this embodiment is not limited thereto, and the electrode assembly 10 may have a jelly-roll type in which an electrode sheet and a separator sheet are wound together, a stack & folding type in which a separator sheet in which unit cells are stacked is folded, or a z-folding type in which a separator sheet in which a plurality of electrodes are stacked is folded in a zigzag shape.

Each of the electrodes 12 may be formed by applying active material slurry to an electrode collector in the form of a metal foil or a metal mesh. In the case of the positive electrode, the electrode collector may include an aluminum material. In the case of the negative electrode, the electrode collector may include a copper material.

The electrode assembly 10 may be provided with an electrode tab 15. The electrode tabs 15 are respectively connected to the electrodes of the electrode assembly 10 to protrude outward from the electrode assembly 10, thereby providing a path, through which electrons are moved, between the inside and outside of the electrode assembly 10.

The plurality of electrode tabs 15 connected to the positive electrode of the plurality of electrodes 12 and the plurality of electrode tabs 15 connected to the negative electrode the plurality of electrodes 12 may protrude in different directions with respect to the electrode assembly 10. However, the present invention is not limited thereto, and the plurality of electrode tabs 15 connected to the positive electrode and the plurality of electrode tabs 15 connected to the negative electrode may protrude in parallel in the same direction with respect to the electrode assembly 10.

An electrode lead 16 that supplies electricity to the outside of the secondary battery 1 may be connected to the plurality of electrode tabs 15 through spot welding or the like. The electrode lead 16 may have one end connected to the plurality of electrode tabs 15 and the other end protruding to the outside of the battery case 20.

A portion of the electrode lead 16 may be surrounded by an insulating part 17. For example, the insulating part 17 may include an insulating tape. The insulating part 17 may be disposed between a pair of sides 29 of the batter case 20 to be described later, and in this state, the pair of sides 29 may be thermally fused to each other. In this case, a portion of the pair of sides 29 may be thermally fused to the insulating part 17. Thus, the insulating part 17 may prevent the electricity generated from the electrode assembly 10 from flowing to the battery case 20 through the electrode lead 16 and may maintain sealing of the battery case 20.

The battery case 20 may be provided by sealing a pair of cases 21 connected to each other through a folding part 30. A configuration of each case 21 to be described below will be described based on a state in which the battery case 20 is unfolded. The unfolded state of the battery case 20 means a state in which the battery case 20 is unfolded by releasing predetermined adhesion or sealing existing in the battery case 20.

The battery case 20 may include a cup part 22 accommodating the electrode assembly 10 and a side 29 disposed around at least a portion of the cup part 22.

In the case of the battery case 20 according to an embodiment of the present invention, each case 21 may include a cup part 22 having a recessed shape and a side 29 disposed around the cup part 22. The side 29 may also be termed a terrace.

The cup part 22 may be recessed by a predetermined depth from the side 29 to form a recessed space S1.

The cup parts 22 of the pair of cases 21 may be connected to each other through the folding part 30. That is, the folding part 30 may be disposed between the pair of cup parts 22, and in a state in which the battery case 20 is unfolded, the folding part 30 may be referred to as a bridge. The folding part 30 may extend in parallel to a longitudinal direction of the battery case 20.

After accommodating the electrode assembly 10 in the recessed space S1 of one cup part 22, the folding part 30 may be folded so that the pair of cup parts 22 face each other. Thus, the other cup part 22 may cover the electrode assembly 10 from above. That is, the recessed spaces S1 of the cup parts 22 may communicate with each other, and the electrode assembly 10 may be accommodated in the recessed space S1.

Preferably, recessed depths of the pair of cup parts 22 may be equal to each other. In this case, the pair of cup parts 22 may have shapes that are symmetrical to each other. However, the present invention is not limited thereto, and it is also possible that the recessed depths of the pair of cup parts 22 are different from each other. In this case, the pair of cup parts 22 may have shapes that are asymmetrical to each other.

In more detail, each cup part 22 may include a base surface 23 and a plurality of circumferential surfaces 24 and 25.

The base surface 23 may face the electrode assembly 10, and the circumferential surfaces 24 and 25 may surround the electrode assembly 10.

The base surface 23 may be formed approximately parallel to the side 29.

The circumferential surfaces 24 and 25 may surround the recessed space S1 together with the base surface 23.

In more detail, the circumferential surfaces 24 and 25 may include a pair of first surfaces 24 extending parallel to a full-length direction of the electrode assembly 10 and a pair of second surfaces 25 extending parallel to a full-width direction of the electrode assembly 10. One of the pair of first surfaces 24 may be connected to the folding part 30, and the other may be connected to the side 29, more particularly, to a first side 29a to be described later. The pair of second surfaces 25 may be connected to the side 29, more particularly, to a second side 29b to be described later in more detail.

The side 29 may be disposed around at least a portion of the cup part 22. The side 29 may be connected to at least a portion of the circumferential surfaces 24 and 25 of the cup part 22. The side 29 may have an approximately ' 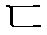 ' shape.

In more detail, the side 29 may include a first side 29a disposed at an opposite side of the folding part 30 with respect to the cup part 22 and a pair of second sides 29b connecting the folding part 30 to the first side 29a.

The first side 29a may extend parallel to the longitudinal direction of the battery case 20. The pair of second sides 29b may extend in parallel to the width direction of the battery case 20 and may be disposed at sides opposite to each other with respect to the cup part 22. The second side 29b of one case 21 may be connected to the second side 29b of the other case 21.

In a state in which the electrode assembly 10 is disposed between the pair of cup parts 22 of the battery case 20, the folding part 30 may be folded, and the pair of sides 29 may be fused with each other to form the secondary battery 1 in which the pair of cases 21 are sealed with each other.

Therefore, in the state in which the battery case 20 is sealed, the base surface 23 of one cup part 22 may form a bottom surface of the secondary battery, and the base surface 23 of the other cup part 22 may form a top surface of the secondary battery. The circumferential surfaces 24 and 25 of the pair of cup parts 22 may form the circumference of the secondary battery together with the folding part 30. In addition, the sides 29 of the pair of cases 21 may be fused to each other to form a sealing part protruding outward from the circumference of the secondary battery. Particularly, the sealing part in which the first sides 29a are fused together may be folded at least once, such as double side folding (DSF).

Each cup part 22 may include a punch edge 26 that connects the base surface 23 to each of the plurality of circumferential surfaces 24 and 25 and is formed to be rounded, a thickness edge 27 that connects the plurality of circumferential surfaces 24 and 25 to each other and is formed to be rounded, and a die edge 28 that connects the plurality of circumferential surfaces 24 and 25 and the sides 29 to each other and is formed to be rounded.

Here, the rounding means forming of a curved surface having a predetermined curvature radius, and the curved surface may have only a uniform curvature, but is not limited thereto. For example, the curved surface may have a non-uniform curvature. In this specification, that each of the edges 26, 27, and 28 is rounded at a specific curvature may mean not only having a specific curvature radius as a whole, but also having the specific curvature radius at a portion thereof.

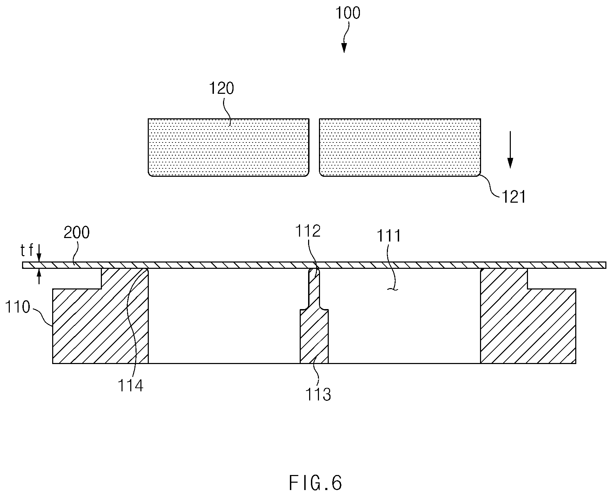

If each of the edges 26, 27, and 28 is not formed to be rounded or formed to be rounded at an excessively small curvature radius, when forming the pouch film 200 (see FIG. 6) for manufacturing the battery case 20, stress may be concentrated into a portion of each of the edges 26, 27, and 28, and thus, cracks may easily occur. In addition, as the cup part 22 is formed deeply, the pouch film 200 is greatly stretched to reduce a thickness of the cup part 22 and increase in risk of cracking. Therefore, it is difficult to form the cup part 22 with a sufficiently deep depth.

On the other hand, if the curvature radius of each of the edges 26, 27, and 28 is too large, there is a problem in that the empty space that is not occupied by the electrode assembly 10 increases in the battery case 20, and thus, the energy density of the secondary battery decreases.

However, since the battery case according to the related art is manufactured by molding a pouch film having low moldability, there is a limit to form the edge having a sufficiently small curvature radius. On the other hand, since the battery case 20 of the present invention is manufactured using the pouch film 200 (see FIG. 6) having the improved moldability, the curvature radius of each of the edges 26, 27, and 28 may be formed to be sufficiently small. The pouch film 200 will be described in detail later.

Referring to FIGS. 4 and 5, the plurality of punch edges 26 provided in each of the cup parts 22 may include a pair of first punch edges 26a and 26b connecting the base surface 23 to the pair of first surfaces 24 and a pair of second punch edges 26c and 26d connecting the base surface 23 to the pair of second surfaces 25. Thus, each of the first punch edges 26a and 26b may extend parallel to the full-length direction of the electrode assembly 10, and each of the second punch edges 26c and 26d may extend parallel to the full-width direction of the electrode assembly 10.

In addition, with respect to the full-width direction of the electrode assembly 10, one 26a of the pair of first punch edges 26a and 26b may be disposed at a side of the folding part 30, and the other one 26b may be disposed at a side of the first side 29a. With respect to the full-length direction of the electrode assembly 10, one 26c of the pair of second punch edges 26c and 26d may be disposed at a side of one of the second sides 29b, and the other one 26d may be disposed at a side of the other second side 29b.

Referring to FIG. 2, the plurality of thickness edges 27 provided in each of the cup parts 22 may include a pair of first thickness edges 27a connecting one end of the pair of first surfaces to the second surface 25 and a pair of second thickness edges 27b connecting the other end of the pair of first surfaces to the second surface 25. Thus, each of the thickness edges 27 may extend substantially parallel to the depth direction of the cup part 22.

Referring to FIGS. 4 and 5, the plurality of die edges 28 provided in each of the cup parts 22 may include a first die edge 28a connecting one of the pair of first surfaces 24 to the first side 29a and second die edges 28b and 28c connecting the pair of second surfaces 25 to the pair of second sides 29b. Thus, the first die edge 28a may extend parallel to the full-length direction of the electrode assembly 10, and each of the second die edges 28b and 28c may extend parallel to the full-width direction of the electrode assembly 10. In addition, with respect to the full-length direction of the electrode assembly 10, one 28b of the pair of second die edges 28b and 28c may be disposed at a side of one of the second sides 29b, and the other one 28c may be disposed at a side of the other second side 29b.

Hereinafter, the curvature radius of each of the punch edges 26 is called 'Rp', the curvature radius of each thickness edge 27 is called 'Rt', and the curvature radius of each of the die edges 28 is called 'Rd'.

The battery case 20 may satisfy at least one conditional expression: 0.3 mm ≤ Rp ≤ 1 mm or Rp ≤ Rt < 3*Rp. Hereinafter, this will be described in more detail.

The battery case 20 may satisfy a conditional expression: 0.3 mm ≤ Rp ≤ 1 mm and may preferably satisfy a conditional expression: 0.3 mm ≤ Rp ≤ 0.7 mm. That is, the curvature radius Rp of each punch edge 26 may be 0.3 mm or more and 1 mm or less, preferably 0.3 mm or more and 0.7 mm or less. As a comparative example, the punch edge of the battery case according to the related art generally has a curvature radius of more than 1 mm and less than or equal to 2 mm.

The battery case 20 may satisfy a conditional expression: Rp ≤ Rt < 3*Rp. It has been previously described as a conditional expression: 0.3 mm ≤ Rp ≤ 1 mm, preferably 0.3 mm ≤ Rp ≤ 0.7 mm, and thus, the battery case 20 may satisfy a conditional expression: 0.3 mm ≤ Rt <3 mm, preferably 0.3 mm ≤ Rt <2.1 mm.

That is, the curvature radius Rt of each thickness edge 27 may be greater than or equal to one time and less than three times the curvature radius Rp of the punch edge 26. In addition, the curvature radius Rt of each thickness edge 27 may be 0.3 mm or more and less than 3 mm, preferably 0.3 mm or more and less than 2.1 mm.

As a comparative example, the thickness edge of the battery case according to the related art generally has a curvature radius that is three times or more than the curvature radius of the punch edge and is 3 mm or more.

In addition, when the depth of the cup part 22 is D, the conditional expression: D/20 ≤ Rp ≤ D/6 may be satisfied. That is, the curvature radius Rp of each punch edge 26 may be 1/20 or more and 1/6 or less of the depth D of the cup part 22.

If the curvature radius Rp of the punch edge 26 is less than 1/20 of the depth D of the cup part 22 or less than 0.3 mm, stress may be excessively concentrated to the punch edge 26, and thus, the cracks or pin-holes may occur. On the other hand, when the curvature radius Rp of the punch edge 26 is greater than 1/6 of the depth D of the cup part 22 or greater than 1 mm, the energy density of the secondary battery 1 may decrease rapidly, and wrinkles and the like may occur due to a degassing process to deteriorate quality of the secondary battery 1.

The battery case 20 may satisfy at least one conditional expression: 0.3mm ≤ Rd ≤ 1mm or Rd ≤ Rt < 3*Rd. Hereinafter, this will be described in more detail.

The battery case 20 may satisfy a conditional expression: 0.3 mm ≤ Rd ≤ 1 mm and may preferably satisfy a conditional expression: 0.3 mm ≤ Rd ≤ 0.7 mm. That is, the curvature radius Rd of each die edge 28 may be 0.3 mm or more and 1 mm or less, preferably 0.3 mm or more and 0.7 mm or less.

The battery case 20 may satisfy a conditional expression: Rd ≤ Rt < 3*Rd. It has been previously described as a conditional expression: 0.3 mm ≤ Rd ≤ 1 mm, preferably 0.3 mm ≤ Rd ≤ 0.7 mm, and thus, the battery case 20 may satisfy a conditional expression: 0.3 mm ≤ Rt <3 mm, preferably 0.3 mm ≤ Rt <2.1 mm.

That is, the curvature radius Rt of each thickness edge 27 may be greater than or equal to one time and less than three times the curvature radius Rd of the die edge 28. In addition, the curvature radius Rt of each thickness edge 27 may be 0.3 mm or more and less than 3 mm, preferably 0.3 mm or more and less than 2.1 mm.

As a comparative example, the thickness edge of the battery case according to the related art generally has a curvature radius that is three times or more than the curvature radius of the die edge and is 3 mm or more.

In addition, when the depth of the cup part 22 is D, the conditional expression: D/20 ≤ Rd ≤ D/6 may be satisfied. That is, the curvature radius Rd of each die edge 28 may be 1/20 or more and 1/6 or less of the depth D of the cup part 22.

If the curvature radius Rd of the die edge 28 is less than 1/20 of the depth D of the cup part 22 or less than 0.3 mm, stress may be excessively concentrated to the die edge 28, and thus, the cracks or pin-holes may occur. On the other hand, when the curvature radius Rd of the die edge 28 is greater than 1/6 of the depth D of the cup part 22 or greater than 1 mm, the energy density of the secondary battery 1 may decrease rapidly, and since an outer appearance of the battery case 20 is not formed neatly, wrinkles or the like may occur to deteriorate the quality of the secondary battery 1.

Since each of corners of the electrodes 12 provided in the electrode assembly 10 is chamfered, the curvature radius of the thickness edge 27 has to be greater than or equal to that of the punch edge 26 in order to minimize the empty space inside the battery case 20 while preventing interference between the electrodes 12 of the electrode assembly 10 and the cup part 22 from occurring. If the curvature radius Rt of the thickness edge 27 is less than the curvature radius Rp of the punch edge 26, a rather large empty space may be formed in a portion adjacent to the corner of the electrode assembly 10 in the cup part 22. In this case, there is a possibility that the wrinkles occur in the cup part 22 due to the degassing process. If the curvature radius Rt of the thickness edge 27 is three times or more than the curvature radius Rp of the punch edge 26, the interference between the cup part 22 and the electrode assembly 10 may occur.

The curvature radii Rp of the plurality of punch edges 26 may be formed to be the same or similar to each other, the curvature radii Rt of the plurality of thickness edges 27 may be formed to be the same or similar to each other, and the curvature radii Rd of the plurality of the die edges 28 may be formed to be the same or similar to each other. As a result, the quality and uniformity of the outer appearance of the battery case 20 may be improved, and the possibility of defects occurring during the manufacturing process may be reduced. However, this embodiment is not limited thereto.

In the process of forming the pouch film 200 (see FIG. 6) to be described later by the die 110 and the punch 120, the pouch film 200 may be stretched. Thus, the thickness of the battery case 20 may be reduced compared to the thickness of the pouch film 200, and in particular, the thickness of the battery case 20 may be reduced as the depth of the cup part 22 is deeply formed. If the thickness of the battery case 20 is too thin, the pin-holes or cracks may occur, and thus there is a problem in that it difficult to form the cup part 22 having the sufficiently deep depth.

In addition, the degree to which the pouch film 200 is stretched may be different depending on the position. Thus, portions of the battery case 20 manufactured by molding the pouch film 200 may have different thicknesses, and in particular, the punch edge 26 may be stretched the most and thus have a thin thickness.

Since the battery case according to the related art is manufactured using a pouch film having low tensile strength and low elongation, there is a high probability of occurrence of the pin-holes or cracks compared to the degree to which the pouch film is stretched, and it is difficult to form the cup part deeply. On the other hand, since the battery case 20 of the present invention is manufactured using the pouch film 200 (see FIG. 6) having the improved tensile strength and elongation, that is, improved toughness, even if the pouch film 200 is greatly stretched, and thus, the thickness of the battery case 20 is reduced, the probability of occurrence of the pin-holes or cracks may be low, and the cup part 22 may be formed to be sufficiently deep. The pouch film 200 will be described in detail later.

Hereinafter, the thickness of the base surface 23 of the cup part 22 is called 'Tb', the thickness of the circumferential surfaces 24 and 25 is called 'Tc', the thickness of the side 29 is called 'Ts', and the thickness of the punch edge 26 is called 'Tp', the thickness of the die edge 28 is called 'Td', and the thickness of the pouch film 200 (see FIG. 6) is called 'Tf'.

The battery case 20 may satisfy a conditional expression: Tb ≥ 0.8*Ts. That is, the thickness Tb of the base surface 23 of the cup part 22 may be 0.8 times or more than the thickness Ts of the side 29. In addition, the battery case 20 may satisfy a conditional expression: Tb ≤ 1.2*Ts. That is, the thickness Tb of the base surface 23 of the cup part 22 may be 1.2 times or less than the thickness Ts of the side 29.

The base surface 23 of the cup part 22 may be a portion formed by being in contact with the bottom surface of the punch 120 (see FIG. 6), and the side 29 may be a portion that is pressed to be fixed between a top surface of the die 110 and a stripper (not shown). Although the stripper is not shown in FIG. 6, since the stripper is a well-known technique, those skilled in the art will be able to easily understand the above description.

Therefore, the base surface 23 and the side 29 of the cup part 22 are relatively less elongated compared to the circumferential surfaces 24 and 25 and the respective edges 26, 27, and 28 of the cup part 22, and thus, a large thickness difference between the base surface 23 and the side 29 may not occur. Therefore, as described above, the thickness Tb of the base surface 23 may be 0.8 times or more and 1.2 times or less than the thickness Ts of the side 29.

If the thickness Tb of the base surface 23 of the cup part 22 is thinner than 0.8 times the thickness Ts of the side 29, the base surface 23 of the cup part 22 may become excessively thin, and thus the possibility of occurrence of the pin-holes or cracks may significantly increase. On the other hand, if the thickness Tb of the base surface 23 of the cup part 22 is thicker than 1.2 times the thickness Ts of the side 29, since the base surface 23 of the cup part 22 is excessively thick, the energy density relative to the volume of the secondary battery 1 may decrease.

In addition, the battery case 20 may satisfy a conditional expression: 0.8*Tf ≤ Tb, Ts ≤ Tf. That is, the thickness Tb of the base surface 23 and the thickness Ts of the side 29 may be 0.8 times or more and 1 time or less the thickness Tf of the pouch film 200.

If each of the thickness Tb of the base surface 23 and the thickness Ts of the side 29 is less than 0.8 times the thickness Tf of the pouch film 200, the possibility of occurrence of the pin-holes or cracks in the circumferential surfaces 24 and 25 of the cup part 22, the punch edge 26, or the die edge 28, which is formed thinner than the base surface 23 and the side 29, may significantly increase. In addition, it is obvious that each of the thickness Tb of the base surface 23 and the thickness Ts of the side 29 is less than or equal to the thickness Tf of the pouch film 200.

The battery case 20 satisfies a conditional expression: 0.5*Tf ≤ Tc, Tp, Td ≤ Tf, and it preferably satisfies a conditional expression: 0.6*Tf ≤ Tc, Tp, Td ≤ Tf. That is, the thickness Tc of each of the circumferential surfaces 24 and 25 of the cup part 22, the thickness Tp of the punch edge 26, and the thickness Td of the die edge 28 may be half or more and 1 time or less the thickness Tf of the pouch film 200, preferably 0.6 times or more and 1 time or less the thickness Tf of the pouch film 200.

If the thickness Tc of each of the circumferential surfaces 24 and 25 of the cup part 22, the thickness Tp of the punch edge 26, and the thickness Td of the die edge 28 are less than 0.5 times the thickness Tf of the pouch film 200, the possibility of occurrence of the pin-holes or cracks may significantly increase. Then, it is obvious that the thickness Tc of each of the circumferential surfaces 24 and 25 of the cup part 22, the thickness Tp of the punch edge 26, and the thickness Td of the die edge 28 are less than or equal to the thickness Tf of the pouch film 200.

In addition, the battery case 20 may satisfy a conditional expression: Tp ≤ Tc ≤ Td. That is, the thickness Tp of the punch edge 26 may be less than or equal to the thickness Tc of each of the circumferential surfaces 24 and 25 of the cup part 22, and the thickness Tc of each of the circumferential surfaces 24 and 25 of the cup part 22 may be less than or equal to the thickness Td of the die edge 28. As a result, it is confirmed that the punch edge 26 of the cup part 22 is stretched the most.

In addition, the battery case 20 may satisfy at least one conditional expression: Tp ≥ 0.6*Tb or Tp ≥ 0.6*Ts. That is, the thickness Tp of the punch edge 26 may be 0.6 times or more the thickness Tb of the base surface 23 of the cup part 22 and/or the thickness Ts of the side 29. Thus, it is possible to prevent the punch edge 26, in which the greatest elongation occurs, from being formed excessively thin. If the thickness Tp of the punch edge 26 is less than 0.6 times the thickness Tb of the base surface 23 of the cup part 22 or less than 0.6 times the thickness Ts of the side 29, the possibility of occurrence of the pin-holes or cracks in the punch edge 26 may significantly increase.

FIG. 6 is a schematic view illustrating a molding device for molding the pouch-type battery case according to an embodiment of the present invention.

The battery case 20 may be manufactured by drawing and molding the pouch film. The pouch film 200 may also be referred to as a pouch sheet.

The thickness Tf of the pouch film 200 may be 160 µm to 200 µm, preferably 180 µmto 200 µm. When the thickness of the pouch film 200 satisfies the above range, a molding depth of the cup part 22 may increase while minimizing the reduction of the accommodation space S1 due to the increase in thickness of the battery case 20 and the decrease in sealing durability.

The molding device 100 for molding the pouch film 200 includes a die 110 on which the pouch film 200 is seated on a top surface thereof, and a punch 120 disposed above the die 110 to descend, thereby punching the pouch film 200. In addition, the die 110 includes a molding part 111 that is recessed inward from the top surface, and the punch 120 forms the cup part 22 by inserting the pouch film 200 into the molding part 111 to drawing-mold the pouch film 200.

According to an embodiment of the present invention, when the pouch film 200 is molded using the molding device 100, the die 110 may be provided with two molding parts 111 adjacent to each other, and a partition wall 112 may be formed between the two molding parts 111. When the pouch film 200 is drawing-molded while the punch 120 is inserted into the two molding parts 111, two cup parts 22 may be formed to correspond to the two molding parts 111, and a bridge forming the folding part 30 (see FIG. 1) to correspond to the partition wall 112 may be formed between the two cup parts 22.

Since the folding part 30 integrally connects the pair of cases 21 to each other, the number of sides 29 to be sealed may be reduced when a sealing process is performed later. Thus, a process rate may be improved, and the number of sealing processes may be reduced. Here, as a width of the folding part 30 decreases, a space between each of the circumferential surfaces 24 and 25 of the cup part 22 and the electrode assembly 10 may also decrease. Thus, since the entire volume of the secondary battery 1 is reduced, the energy density relative to the volume may increase.

When the pouch film 200 is molded, the thickness of the bridge may be minimized, and for this, the thickness of the partition wall 112 may be minimized. However, if the partition wall 112 is formed to have an excessively high height in a thin state, the partition wall 112 may be damaged in the drawing-molding process. Particularly, according to the related art, the die 110 has the bottom, but in this case, when the punch 120 molds the pouch film 200, a gas existing in the space between the pouch film 200 and the molding part 111 may not be discharged. Therefore, recently, the bottom of the die 110 may be removed so that the gas existing in the space between the pouch film 200 and the molding part 111 is easily discharged, but the height of the partition wall 112 may be excessively high. Therefore, a reinforcement part 113 that has a thickness greater than that of the partition wall 112 may be formed under the partition wall 112. The reinforcing part 113 may be formed to be further down than the cup part 22 to be formed in the battery case 20 and may be formed at a position at which the partition wall 112 is not damaged. An exact position of the reinforcing part 113 may be experimentally determined according to the thickness of the partition wall 112, a material of the partition wall 112, a pressure of the punch 120, and the depth D of the cup part 22 to be formed.

According to an embodiment of the present invention, the pouch film 20 molded as the battery case 20 may include a sealant layer 200a, a barrier layer 200b, and a surface protection layer 200c and further include a drawing assistance layer 200d as necessary.

The sealant layer 200a may be made of the first polymer and be formed at the innermost layer to be in direct contact with the electrode assembly 10. Here, the innermost layer represents a layer disposed at the last when oriented in the direction in which the electrode assembly 10 is disposed with respect to the barrier layer 200b. The battery case 20 may be manufactured while a portion of the pouch film 200 is drawn to form the cup part 22 including the accommodation space S1 (see FIG. 1) having the pocket shape when the pouch film 200 having the stacked structure as described above is drawing-molded by using the punch 120 or the like. Also, when the electrode assembly 10 is accommodated in the accommodation space S1, the electrolyte is injected. Thereafter, when the pair of sides 29 facing each other are thermally compressed, the battery case 20 is sealed by bonding the sealant layers 200a to each other. Here, since the sealant layer 200a is in direct contact with the electrode assembly 10, the sealant layer 200a has to have insulating properties. Also, since the sealant layer 200a is in contact with the electrolyte, the sealant layer 200a has to have corrosion resistance. Also, since the inside of the battery case 20 is completely sealed to prevent materials from moving between the inside and outside of the battery case 20, high sealability has to be realized. That is, the side 29 in which the sealant layers 200a are bonded to each other should have superior thermal bonding strength. In general, the first polymer forming the sealant layer 200a may include one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Particularly, a polyolefin-based resin such as polypropylene (PP) or polyethylene (PE) is used for the sealant layer 200a. Polypropylene (PP) is excellent in mechanical properties such as tensile strength, rigidity, surface hardness, abrasion resistance, and heat resistance and chemical properties such as corrosion resistance and thus is mainly used for manufacturing the sealant layer 200a. Furthermore, the sealant layer 200a may be made of a casted polypropylene, an acid-treated polypropylene, or a polypropylene-butylene-ethylene terpolymer. Here, the acid-treated polypropylene may be maleic anhydride polypropylene (MAH PP). Also, the sealant layer 200a may have a single layer structure made of one material or a composite layer structure in which two or more materials are respectively formed as layers.

According to an embodiment of the present invention, the sealant layer 200a may have a thickness of 60 µm to 100 µm, and in particular, a thickness of 75 µm to 85 µm. If the sealant layer 200a has a thickness less than 60 µm, there is a problem that the sealant layer 200a is deteriorated in durability such as a case in which the inside is broken during the sealing. Also, if the thickness of the sealant layer 200a is thicker than 100 µm, since the entire pouch is excessively thick, the moldability may be rather deteriorated, or the energy density relative to the volume of the secondary battery 1 may be reduced. When the thickness of the sealant layer 200a is thin, an insulation breakdown voltage of the pouch film 200 may be lowered, and thus the insulation may be deteriorated. When the battery is manufactured using the pouch film 200 having the poor insulation, a defect rate may increase.

The barrier layer 200b is disposed between the surface protection layer 200c and the sealant layer 200a to secure mechanical strength of the pouch, block introduction and discharge of a gas or moisture outside the secondary battery 1, and prevent the electrolyte from leaking. The barrier layer 200b may be made of an aluminum alloy thin film. The aluminum alloy thin film may secure the mechanical strength having a predetermined level or more, but be light in weight. Thus, the aluminum alloy thin film may complement for electrochemical properties and secure heat dissipation due to the electrode assembly 10 and the electrolyte.

More specifically, the aluminum alloy thin film according to an embodiment of the present invention may have a grain size of 10 µm to 13 µm, preferably 10.5 µm to 12.5 µm, and more preferably 11 µm to 12 µm. When the grain size of the aluminum alloy thin film satisfies the above range, the molding depth may increase without causing the pin-holes or cracks when the cup part is molded.

The aluminum alloy thin film may include one or two kinds or more selected from the group consisting of iron (Fe), copper (Cu), chromium (Cr), manganese (Mn), nickel (Ni), magnesium (Mg), and zinc (Zn) in addition to aluminum.

According to the related art, the barrier layer 200b has a thickness of approximately 30 µm to approximately 50 µm, in particular, 40 µm, and thus, moldability is deteriorated. Therefore, even if the pouch film is drawing-molded, there is a limit to form the circumferential surface of the cup part that is close to vertical as the depth of the cup part is deep, and there is a limit to reduce the curvature radius of each edge of the cup part. In addition, when the battery case undergoes an impact from the outside, the internal electrode assembly may be easily damaged due to the weak puncture strength.

In order to solve this problem, if the thickness of the barrier layer 200b increases to approximately 80 µm or more, not only manufacturing costs increase, but also the total thickness of the battery case 20 is excessively thick. As a result, there is a problem in that energy density to the volume of the secondary battery 1 is deteriorated. If the thickness of the sealant layer 200a is reduced to less than 60 µm in order to reduce the total thickness of the battery case 20, there is a problem in that sealing durability is deteriorated as described above.

According to an embodiment of the present invention, the barrier layer 200b may have a thickness of 50 µm to 80 µm, and in particular, 55 µm to 65 µm. Thus, moldability of the barrier layer 200b may be improved, and when the pouch film 200 is drawing-molded, the depth D of the cup part 22 may be formed to be deep, and each of the circumferential surfaces 24 and 25 of the cup part 22 may be formed similar to the vertical state, and thus, the curvature radius of each of the edges 26, 27, and 28 of the cup part 22 may be reduced. Thus, since the accommodation space S1 increases in volume, the electrode assembly 10 accommodated in the accommodation space S1 may also increase in volume, and energy density relative to the volume of the secondary battery 1 may also increase. In addition, the manufacturing costs may not increase significantly, the total thickness of the pouch may not increase significantly without reducing the thickness of the sealant layer 200a, and the sealing durability may not be deteriorated.

In addition, since the pouch film 200 is improved in puncture strength, even if the pouch film is damaged by receiving a large pressure from the outside or being pricked by a sharp object, an electrode assembly 10 in the pouch film may be more effectively protected. Here, the excellent puncture strength may mean that strength when a hole is punched in the pouch film 200 is high.

However, when only the thickness of the aluminum alloy thin film increases, the molding depth may increase, but the pin-holes or cracks may be generated in the aluminum alloy thin film after the molding to deteriorate the sealing durability.

As a result of repeated research by the present inventors, when the aluminum alloy thin film having a specific grain size is applied as the material of the barrier layer 200b, and the thickness of each of the barrier layer 200b and the sealant layer 200a is controlled within a specific range, it is found that the cup part 22 may be molded deeply, and the sealing durability also may be maintained excellently. Therefore, the present invention has been implemented.

Particularly, the barrier layer 200b according to the present invention includes an aluminum alloy thin film having a grain size of 10 µm to 13 µm, preferably 10.5 µm to 12.5 µm, and more preferably 11 µm to 12 µm. When the grain size of the aluminum alloy thin film satisfies the above range, the molding depth D may increase without causing the pin-holes or cracks when the cup part 22 is molded. When the grain size of the aluminum alloy thin film exceeds 13 µm, the strength of the aluminum alloy thin film decreases, and the generation of the cracks or pin-holes increases due to difficulty in dispersing internal stress during the drawing. When the grain size is less than 10 µm, the flexibility of the aluminum alloy thin film is lowered, and there is a limitation in improving the moldability.

The grain size varies depending on a composition of the aluminum alloy thin film and a processing method of the aluminum alloy thin film. Here, a cross-section in thickness direction of the aluminum alloy thin film may be observed and measured using a scanning electron microscope (SEM). Particularly, in the present invention, an SEM image of the cross-section in the thickness direction of the aluminum alloy thin film may be acquired using the scanning electron microscope, and then, maximum diameters of the predetermined number of grains among the grains observed through the SEM image may be measured to evaluate a mean value of the maximum diameters as the grain size.

The surface protection layer 200c is made of the second polymer and formed at the outermost layer to protect the secondary battery 1 against external friction and collision and also electrically insulates the electrode assembly 10 from the outside. Here, the outermost layer represents a layer disposed at the last when oriented in a direction opposite to the direction in which the electrode assembly 10 is disposed with respect to the barrier layer 200b. The second polymer forming the surface protection layer 200c may include one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Particularly, a polymer such as polyethylene terephthalate (PET) having abrasion resistance and heat resistance may be used mainly. Also, the surface protection layer 200c may have a single layer structure made of one material or a composite layer structure in which two or more materials are respectively formed as layers.

According to an embodiment of the present invention, the surface protection layer 200c may have a thickness of 5 µm to 25 µm, in particular, 7 µm to 12 µm. If the thickness of the surface protection layer 200c is less than 5 µm, there may be a problem that external insulation is deteriorated. On the other hand, if the thickness of the surface protection layer 200c is thicker than 25 µm, the entire pouch is thicker, and thus, the energy density relative to the volume of the secondary battery 1 may be reduced.

Although PET is inexpensive, has excellent durability, and has excellent electrical insulation, the PET has poor bonding force with respect to aluminum, which is frequently used for the barrier layer 200b, and also, a behavior when the PET is drawn by applying stress may be different. Thus, when the surface protection layer 200c and the barrier layer 200b are directly bonded to each other, the surface protection layer 200c and the barrier layer 200b may be delaminated during the drawing-molding. As a result, the barrier layer 200b is not uniformly drawn to cause the deterioration in moldability.

According to an embodiment of the present invention, the battery case 20 may further include a drawing assistance layer 200d that is made of a third polymer and is stacked between the surface protection layer 200c and the barrier layer 200b. The drawing assistance layer 200d may be stacked between the surface protection layer 200c and the barrier layer 200b to prevent the surface protection layer 200c and the barrier layer 200b from being delaminated when the surface protection layer 200c and the barrier layer 200b are drawn. The third polymer forming the drawing assistance layer 200d may include one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Particularly, since a nylon resin easily adheres to polyethylene terephthalate (PET) of the surface protection layer 200c, and a behavior when being drawn is similar to that of an aluminum alloy of the barrier layer 200b, the nylon resin may be mainly used. Also, the drawing assistance layer 200d may have a single layer structure made of one material or a composite layer structure in which two or more materials are respectively formed as layers.

In the related art, the barrier layer 200b has a thickness of approximately 40 µm, and thus the drawing assistance layer 200d had a significantly thin thickness of approximately 15 µm. That is, a thickness ratio of the drawing assistance layer and the barrier layer is 1:2.67, and a thickness rate of the barrier layer was considerably high. However, as described above, according to an embodiment of the present invention, since the barrier layer 200b has a thickness of approximately 50 µm to approximately 80 µm, and in particular, a thickness of 55 µm to 65 µm, the moldability of the barrier layer 200b is improved. Here, in order to also improve the moldability of the drawing assistance layer 200d, the drawing assistance layer 200d may have a thickness of 20 µm to 50 µm, and in particular, a thickness of 25 µm to 38 µm. If the drawing assistance layer 200d has a thickness less than 20 µm, the drawing assistance layer 200d may not conform to the improved moldability of the barrier layer 200b and may be damaged during the drawing. On the other hand, if the drawing assistance layer 200d has a thickness greater than 50 µm, the total thickness of the pouch is thick to increase in volume of the secondary battery 1, thereby deteriorating the energy density. Particularly, according to an embodiment of the present invention, a thickness ratio of the drawing assistance layer 200d and the barrier layer 200b may be less than 1:2.5. That is, the thickness ratio of the drawing assistance layer 200d may more increase when compared to the thickness ratio of the drawing assistance layer 200d according to the related art. However, when the thickness of the drawing assistance layer 200d is excessively thick, the total thickness of the battery case 20 is thicker, and thus, the thickness ratio may be greater than 1:1.5 in order to prevent the total thickness of the pouch from be excessively thicker. That is, the thickness ratio may be 1:1.5 to 1:2.5.

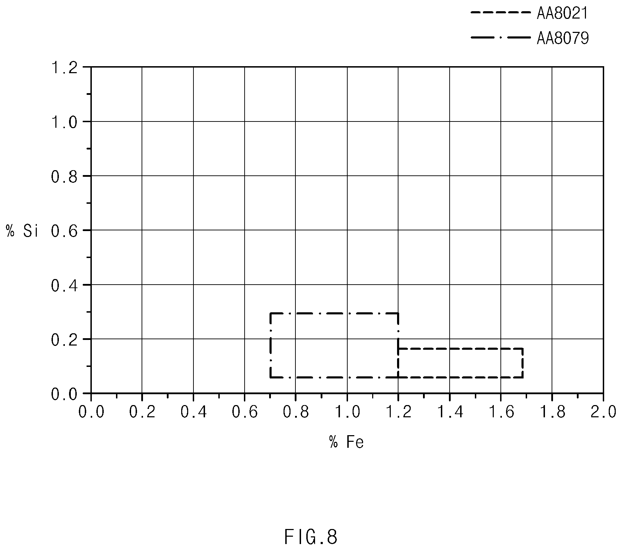

FIG. 8 is a graph illustrating iron and silicon contents of an aluminum alloy having an alloy number AA8079 and an aluminum alloy having an alloy number AA8021;

As described above, the aluminum alloy thin film forming the barrier layer 200b may have a grain size of 10 µm to 13 µm, preferably 10.5 µm to 12.5 µm, more preferably 11 µm to 12 µm.

In addition, an iron (Fe) content in the aluminum alloy thin film may be 1.2 wt% to 1.7 wt%, preferably 1.3 wt% to 1.7 wt%, more preferably 1.3 wt% to 1.45 wt%. If the iron (Fe) content in the aluminum alloy thin film is less than 1.2 wt%, the strength of the aluminum alloy thin film may be deteriorated to generate the cracks and pin-holes during the molding. If the iron (Fe) content exceeds 1.7 wt%, the flexibility of the aluminum alloy thin film is deteriorated to cause a limitation in improving of the moldability.

In addition, a silicon (Si) content in the aluminum alloy thin film may be 0.2 wt% or less, preferably 0.05 wt% to 0.2 wt%, more preferably 0.1 wt% to 0.2 wt%. When the silicon content exceeds 0.2 wt%, the moldability may be deteriorated.

Particularly, the aluminum alloy thin film according to the present invention may be an aluminum alloy having the alloy number AA8021.

On the other hand, the aluminum alloy thin film having the alloy number AA8079 was mainly used for the pouch film according to the related art. When the aluminum alloy contains a large amount of iron, mechanical strength is improved, and when the aluminum alloy contains a small amount of iron, flexibility is improved.

The aluminum alloy having the alloy number AA8079 (hereinafter, referred to as an AA8079 aluminum alloy) contains 0.6 wt% to 1.2 wt% of iron, and 0.3 wt% or less of silicon. In the case of the aluminum alloy of alloy number AA8079, relatively little iron is included, and when the barrier layer 200b is manufactured using the same, the flexibility may be improved, but the strength may be deteriorated, and thus there may be a limitation in moldability.

On the other hand, an AA8021 aluminum alloy may contains 1.2 wt% to 1.7 wt% of iron, and in particular, 1.3 wt% to 1.7 wt%, and 0.2 wt% or less of silicon. In the case of manufacturing the barrier layer 200b using the AA8021 aluminum alloy, since a relatively large amount of iron is contained, the tensile strength, the elongation rate, and the puncture strength may be improved.

On the other hand, when tensile force is applied to any material, a relationship between the tensile strength and the elongation rate may be expressed as a graph. Here, if a vertical axis of the graph is the tensile strength, and a horizontal axis is the elongation rate, a lower area of the graph is toughness of the corresponding material. The toughness refers to a degree of toughness against fracture of the material, and the more the toughness increases, the more the material is drawn until the material is not broken.

Thus, when the barrier layer 200b is manufactured using the AA8021 aluminum alloy, the tensile strength and the elongation rate may be improved, and thus, the toughness and the moldability may be improved.

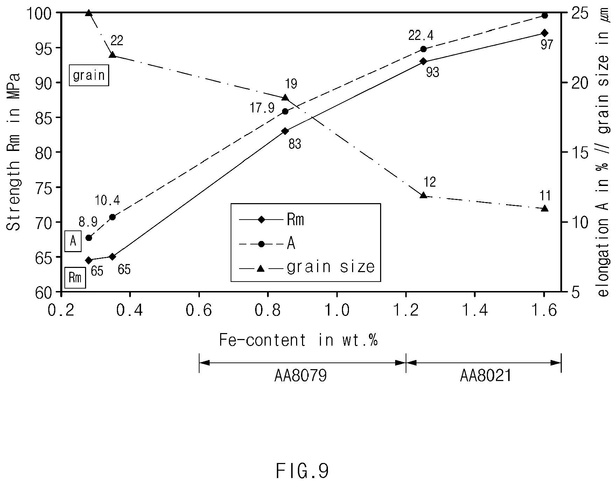

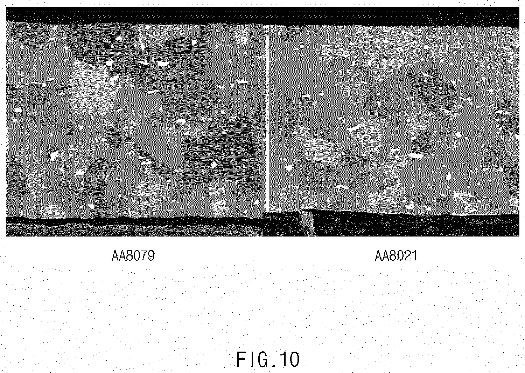

FIG. 9 is a graph illustrating tensile strength, an elongation rate, and a grain size according to the iron and silicon contents of the aluminum alloy having the alloy number AA8079 and the aluminum alloy having the alloy number AA8021, and FIG. 10 is an enlarged SEM image illustrating grains of the aluminum alloy having the alloy number AA8079 and the aluminum alloy having the alloy number AA8021.

As illustrated in FIG 9, the tensile strength, the elongation rate, and the grain size are changed according to the iron content of the aluminum alloy. Particularly, since the tensile strength and the elongation rate are proportional to the iron content, the tensile strength and the elongation rate also increase as the iron content increases. On the other hand, since the grain size is inversely proportional to the iron content, the grain size decreases as the iron content increases.

The AA8079 aluminum alloy has a relatively large grain size of 13 µm to 21 µm. Thus, there is a problem in that since internal stress is less dispersed when being drawn, and thus, the number of pin-holes increases, the moldability of the battery case 20 is deteriorated.

The AA8021 aluminum alloy has a relatively small grain size of 10 µm to 13 µm. Thus, since the internal stress is more dispersed when being drawn, the number of pin-holes may decrease to improve the moldability of the battery case 20.

The pouch-type secondary battery case 20 manufactured by molding the pouch film 200 having the barrier layer 200b may have improved moldability so that a depth D of the cup part 22 may be deeper, each of the circumferential surfaces 24 and 25 of the cup part 22 may also be formed similar to the vertical state, and the curvature radius of each of the edges 26, 27, and 28 of the cup part 22 may be reduced to accommodate the larger and thicker electrode assembly 10. Thus, the secondary battery 1 manufactured with the battery case 20 may increase in energy density to a volume thereof.

The pouch film 200 according to the present invention has excellent tensile strength and elongation rate by including the aluminum alloy thin film having a specific thickness and grain size. Particularly, after the pouch film 200 according to the present invention is cut to a size of 15 mm * 80 mm, the tensile strength measured while being pulled at a tensile speed of 50 mm/min may be 200 N/15mm to 300 N/15mm, preferably 210 N/15 mm to 270 N/15 mm, more preferably 220 N/15 mm to 250 N/15 mm, and the elongation rate may be 120% to 150%, preferably 120% to 140%, more preferably 120% to 130%. As described above, the pouch film stack according to the present invention has the high tensile strength and elongation rate to increase in toughness. As a result, when the cup is molded, the possibility of generation of the cracks is low even though the molding depth is deep.

In addition, the pouch film stack according to the present invention has excellent puncture strength by including the aluminum alloy thin film having a specific thickness and grain size. Specifically, the pouch film stack according to the present invention may have puncture strength of 30 N or more.

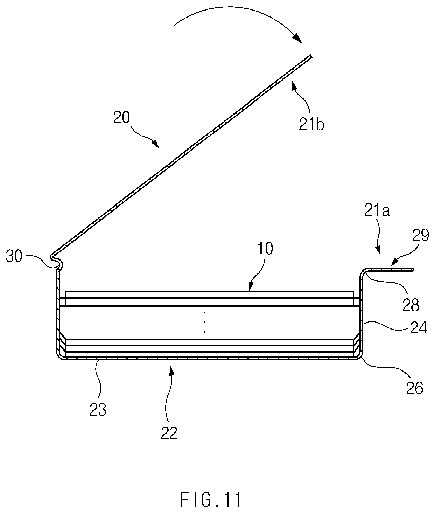

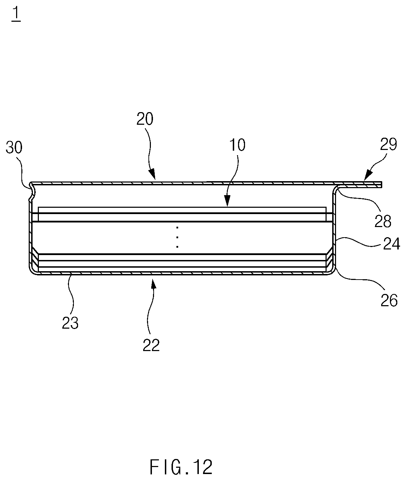

FIG. 11 is a schematic view illustrating a state in which a pouch-type battery case is folded according to another embodiment of the present invention, and FIG. 12 is a schematic view illustrating a state in which a pouch-type battery case is folded according to another embodiment of the present invention.

Hereinafter, contents duplicated with the previously described contents will be cited, and described with a focus on the differences.

A pouch-type battery case 20 (hereinafter, referred to as a battery case) according to another embodiment of the present invention may be formed by sealing a first case 21a and a second case 21b connected to each other by a folding part 30 to each other. The cup part 22 may be formed in the first case 21a, and the cup part 22 may not be formed in the second case 21b.

The second case 21b may have a substantially flat plate shape. A portion of the second case 21b may cover the cup part 22 of the first case 21a, and the other portion of the second case 21b may be fused to the side 29 of the first case 21a to form a sealing part.

In more detail, after accommodating the electrode assembly 10 in the recessed space S1 of the cup part 22 of the first case 21a, the folding part 30 may be folded allow the second case 21b to cover the recessed space S1 from the upper side.

Those skilled in the art will be able to easily understand that the battery case 20 according to this embodiment is also manufactured by molding the pouch film 200 described above, and thus may satisfy the conditional expressions described in one embodiment.

Therefore, the scope of the present disclosure is defined not by the detailed description of the invention but by the appended claims, and all differences within the scope will be construed as being included in the present disclosure.

### [Description of the Symbols]

1: Secondary battery 10: Electrode assembly
20: Pouch-type battery case 21: Case
22: Cup part 23: Base surface (of cup part)
24, 25: Circumferential surface (of cup part) 26: Punch edge
27: Thickness edge 28: Die edge
29: Side 30: Folding part
200: Pouch film 200a: Sealant layer
200b: Barrier layer 200c: Surface protection layer
200d: Drawing assistance layer Rp: Curvature radius (of punch edge)
Rt: Curvature radius (of thickness edge) Rd: Curvature radius (of die edge)
Tb: Thickness (base surface of cup part) Tc: Thickness (of circumferential surface of cup part)
Ts: Thickness (of side) Tp: Thickness (of punch edge)
Td: Thickness (of die edge) Tf: Thickness (of pouch film)

## Claims

1. A pouch-type battery case (20) comprising:
a cup part (22) having a recessed shape; and
a side (29) disposed around at least a portion of the cup part (22),
wherein the cup part (22) comprises:
a base surface (23);
a plurality of circumferential surfaces (24, 25);
a plurality of die edges (28) connecting the plurality of circumferential surfaces (24, 25) and the side (29) to each other and formed to be rounded;
a plurality of punch edges (26) connecting the base surface (23) to the plurality of circumferential surfaces (24, 25) and formed to be rounded,and
a plurality of thickness edges (27) connecting the plurality of circumferential surfaces (24, 25) to each other and formed to be rounded,
wherein, when a curvature radius of each of the die edges (28) is Rd, and a curvature radius of each of the thickness edges (27) is Rt, a conditional expression: Rd ≤ Rt < 3*Rd is satisfied;
**characterized in that** when a thickness of the base surface (23) of the cup part (22) is Tb, and a thickness of the side (29) is Ts, a conditional expression: 0.8*Ts ≤ Tb ≤ 1.2*Ts is satisfied, and **in that**
when a thickness of the pouch film (200) is Tf, a thickness of each of the circumferential surfaces (24, 25) of the cup part (22) is Tc, a thickness of each of the punch edges (26) is Tp, and a thickness of the die edge (28) is Td, a conditional expression: 0.5*Tf ≤ Tc, Tp, Td ≤ Tf is satisfied.

2. The pouch-type battery case of claim 1, wherein, when a depth of the cup part (22) is D, a conditional expression: D/20 ≤ Rd ≤ D/6 is satisfied.

3. The pouch-type battery case of claim 1, wherein a conditional expression: 0.3 mm ≤ Rt < 3 mm is satisfied.

4. The pouch-type battery case of claim 1, wherein curvature radii of the plurality of thickness edges (27) are the same as each other.

5. The pouch-type battery case of claim 1, wherein curvature radii of the plurality of die edges (28) are equal to each other.

6. The pouch-type battery case of claim 1, wherein the cup part (22) further comprises a plurality of punch edges (26) connecting the base surface (23) to the plurality of circumferential surfaces (24, 25) and formed to be rounded,
wherein, when a curvature radius of each of the punch edges (26) is Rp, at least one conditional expression: 0.3 mm ≤ Rp ≤ 1 mm or Rp ≤ Rt < 3*Rp is satisfied.

7. The pouch-type battery case of claim 6, wherein, when a depth of the cup part is D, a conditional expression: D/20 ≤ Rp ≤ D/6 is satisfied.

8. The pouch-type battery case of claim 1, wherein, when a thickness of a pouch film (200) for forming the pouch-type battery case (20) is Tf, a conditional expression: 0.8*Tf ≤ Tb, Ts ≤ Tf is satisfied.

9. The pouch-type battery case of claim 1, wherein a conditional expression: 0.6*Tf ≤ Tc, Tp, Td ≤ Tf is satisfied.

10. The pouch-type battery case of claim 1, wherein a conditional expression: Tp ≥ 0.6*Tb is satisfied.

11. The pouch-type battery case of claim 1, wherein a conditional expression: Tp ≥ 0.6*Ts is satisfied.

12. The pouch-type battery case of claim 1, wherein a conditional expression: Tp ≤ Tc ≤ Td is satisfied.

13. A secondary battery (1) comprising:
a pouch-type battery case (20) according to claim 1; and
an electrode assembly (10) accommodated in a cup part (22) of the pouch-type battery case (20).

## Patentansprüche

1. Batteriegehäuse (20) vom Beuteltyp, umfassend:
einen Becherteil (22), welcher eine vertiefte Form aufweist; und
eine Seite (29), welche um wenigstens einen Abschnitt des Becherteils (22) angeordnet ist,
wobei der Becherteil (22) umfasst:
eine Basisfläche (23);
eine Mehrzahl von Umfangsflächen (24, 25);
eine Mehrzahl von Matrizenrändern (28), welche die Mehrzahl von Umfangsflächen (24, 25) und die Seite (29) miteinander verbinden und welche gebildet sind, um abgerundet zu sein;
eine Mehrzahl von Stempelrändern (26), welche die Basisfläche (23) mit der Mehrzahl von Umfangsflächen (24, 25) verbinden und welche gebildet sind, um abgerundet zu sein, und
eine Mehrzahl von Dickenrändern (27), welche die Mehrzahl von Umfangsflächen (24, 25) miteinander verbinden und welche gebildet sind, um abgerundet zu sein,
wobei, wenn ein Krümmungsradius jeder der Matrizenränder (28) Rd ist und ein Krümmungsradius jeder der Dickenränder (27) Rt ist, ein Bedingungsausdruck: Rd ≤ Rt < 3*Rd erfüllt ist;
**dadurch gekennzeichnet, dass**, wenn eine Dicke der Basisfläche (23) des Becherteils (22) Tb ist und eine Dicke der Seite (29) Ts ist, ein Bedingungsausdruck: 0,8*Ts ≤ Tb ≤ 1,2*Ts erfüllt ist, und dadurch, dass
wenn eine Dicke der Beutelfolie (200) Tf ist, eine Dicke jeder der Umfangsflächen (24, 25) des Becherteils (22) Tc ist, eine Dicke jedes der Stempelränder (26) Tp ist und eine Dicke des Matrizenrands (28) Td ist, ein Bedingungsausdruck: 0,5*Tf ≤ Tc, Tp, Td ≤ Tf erfüllt ist.

2. Batteriegehäuse vom Beuteltyp nach Anspruch 1, wobei, wenn eine Tiefe des Becherteils (22) D ist, ein Bedingungsausdruck: D/20 ≤ Rd ≤ D/6 erfüllt ist.

3. Batteriegehäuse vom Beuteltyp nach Anspruch 1, wobei ein Bedingungsausdruck: 0,3 mm ≤ Rt < 3 mm erfüllt ist.

4. Batteriegehäuse vom Beuteltyp nach Anspruch 1, wobei die Krümmungsradien der Mehrzahl von Dickenrändern (27) untereinander gleich sind.

5. Batteriegehäuse vom Beuteltyp nach Anspruch 1, wobei die Krümmungsradien der Mehrzahl von Matrizenrändern (28) gleich sind.

6. Batteriegehäuse vom Beuteltyp nach Anspruch 1, wobei der Becherteil (22) ferner eine Mehrzahl von Stempelrändern (26) umfasst, welche die Basisfläche (23) mit der Mehrzahl von Umfangsflächen (24, 25) verbinden und welche gebildet sind, um abgerundet zu sein,
wobei, wenn ein Krümmungsradius jedes der Stempelränder (26) Rp ist, wenigstens ein Bedingungsausdruck: 0,3 mm ≤ Rp ≤ 1 mm oder Rp ≤ Rt < 3*Rp erfüllt ist.

7. Batteriegehäuse vom Beuteltyp nach Anspruch 6, wobei, wenn eine Tiefe des Becherteils D ist, ein Bedingungsausdruck: D/20 ≤ Rp ≤ D/6 erfüllt ist.

8. Batteriegehäuse vom Beuteltyp nach Anspruch 1, wobei, wenn eine Dicke einer Beutelfolie (200) zum Bilden des Batteriegehäuses (200) vom Beuteltyp Tf ist, ein Bedingungsausdruck: 0,8*Tf ≤ Tb, Ts ≤ Tf erfüllt ist.

9. Batteriegehäuse vom Beuteltyp nach Anspruch 1, wobei ein Bedingungsausdruck: 0,6*Tf ≤ Tc, Tp, Td ≤ Tf erfüllt ist.

10. Batteriegehäuse vom Beuteltyp nach Anspruch 1, wobei ein Bedingungsausdruck: Tp ≥ 0,6*Tb erfüllt ist.

11. Batteriegehäuse vom Beuteltyp nach Anspruch 1, wobei ein Bedingungsausdruck: Tp ≥ 0,6*Ts erfüllt ist.

12. Batteriegehäuse vom Beuteltyp nach Anspruch 1, wobei ein Bedingungsausdruck: Tp ≤ Tc ≤ Td erfüllt ist.

13. Sekundärbatterie (1), umfassend:
ein Batteriegehäuse (20) vom Beuteltyp nach Anspruch 1; und
eine Elektrodenanordnung (10), welche in einem Becherteil (22) des Batteriegehäuses (20) vom Beuteltyp aufgenommen ist.

## Revendications

1. Boîtier de batterie de type poche (20) comprenant :
une partie coupelle (22) ayant une forme creuse ; et
un côté (29) disposé autour d'au moins une portion de la partie coupelle (22),
dans lequel la partie coupelle (22) comprend :
une surface de base (23) ;
une pluralité de surfaces circonférentielles (24, 25) ;
une pluralité de bords de matrice (28) reliant la pluralité de surfaces circonférentielles (24, 25) et le côté (29) les uns aux autres et formés pour être arrondis ;
une pluralité de bords de poinçon (26) reliant la surface de base (23) à la pluralité de surfaces circonférentielles (24, 25) et formés pour être arrondis, et
une pluralité de bords d'épaisseur (27) reliant la pluralité de surfaces circonférentielles (24, 25) l'une à l'autre et formés pour être arrondis,
dans lequel, lorsqu'un rayon de courbure de chacun des bords de matrice (28) est Rd, et un rayon de courbure de chacun des bords d'épaisseur (27) est Rt, une expression conditionnelle : Rd ≤ Rt < 3 * Rd est satisfaite ;
**caractérisé en ce que** lorsqu'une épaisseur de la surface de base (23) de la partie coupelle (22) est Tb, et une épaisseur du côté (29) est Ts, une expression conditionnelle : 0,8 * Ts ≤ Tb ≤ 1,2 * Ts est satisfaite, et **en ce que**
lorsqu'une épaisseur du film de poche (200) est Tf, une épaisseur de chacune des surfaces circonférentielles (24, 25) de la partie coupelle (22) est Tc, une épaisseur de chacun des bords de poinçon (26) est Tp, et une épaisseur du bord de matrice (28) est Td, une expression conditionnelle : 0,5 * Tf ≤ Tc, Tp, Td ≤ Tf est satisfaite.

2. Boîtier de batterie de type poche selon la revendication 1, dans lequel, lorsqu'une profondeur de la partie coupelle (22) est D, une expression conditionnelle : D/20 ≤ Rd ≤ D/6 est satisfaite.

3. Boîtier de batterie de type poche selon la revendication 1, dans lequel une expression conditionnelle : 0,3 mm ≤ Rt < 3 mm est satisfaite.

4. Boîtier de batterie de type poche selon la revendication 1, dans lequel les rayons de courbure de la pluralité de bords d'épaisseur (27) sont identiques les uns aux autres.

5. Boîtier de batterie de type poche selon la revendication 1, dans lequel les rayons de courbure de la pluralité de bords de matrice (28) sont égaux les uns aux autres.

6. Boîtier de batterie de type poche selon la revendication 1, dans lequel la partie coupelle (22) comprend en outre une pluralité de bords de poinçon (26) reliant la surface de base (23) à la pluralité de surfaces circonférentielles (24, 25) et formés pour être arrondis,
dans lequel, lorsqu'un rayon de courbure de chacun des bords de poinçon (26) est Rp, au moins une expression conditionnelle : 0,3 mm ≤ Rp ≤ 1 mm ou Rp ≤ Rt < 3 * Rp est satisfaite.

7. Boîtier de batterie de type poche selon la revendication 6, dans lequel, lorsqu'une profondeur de la partie coupelle est D, une expression conditionnelle : D/20 ≤ Rp ≤ D/6 est satisfaite.

8. Boîtier de batterie de type poche selon la revendication 1, dans lequel, lorsqu'une épaisseur d'un film de poche (200) pour former le boîtier de batterie de type poche (20) est Tf, une expression conditionnelle : 0,8 * Tf ≤ Tb, Ts ≤ Tf est satisfaite.

9. Boîtier de batterie de type poche selon la revendication 1, dans lequel une expression conditionnelle : 0,6 * Tf ≤ Tc, Tp, Td ≤ Tf est satisfaite.

10. Boîtier de batterie de type poche selon la revendication 1, dans lequel une expression conditionnelle : Tp ≥ 0,6 * Tb est satisfaite.

11. Boîtier de batterie de type poche selon la revendication 1, dans lequel une expression conditionnelle : Tp ≥ 0,6 * Ts est satisfaite.

12. Boîtier de batterie de type poche selon la revendication 1, dans lequel une expression conditionnelle : Tp ≤ Tc ≤ Td est satisfaite.

13. Batterie secondaire (1) comprenant :
un boîtier de batterie de type poche (20) selon la revendication 1 ; et
un ensemble d'électrodes (10) contenu dans une partie coupelle (22) du boîtier de batterie de type poche (20).
